(19) **Europäisches Patentamt / European Patent Office / Office européen des brevets**

(11) **EP 4 603 863 A1**

(12) **EUROPEAN PATENT APPLICATION**

(43) Date of publication:
**20.08.2025 Bulletin 2025/34**

(21) Application number: **24215640.4**

(22) Date of filing: **27.11.2024**

(51) International Patent Classification (IPC):
**G01S 5/02** (2010.01)          **H04W 24/08** (2009.01)
**H04W 64/00** (2009.01)

(52) Cooperative Patent Classification (CPC):
**G01S 5/0278; H04W 64/00;** G01S 5/0244;
H04W 24/08

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.02.2024 FI 20245161**

(71) Applicant: **Nokia Technologies Oy
02610 Espoo (FI)**

(72) Inventors:
• **CARRILLO MELGAREJO, Dick**
  **Lappeenranta (FI)**
• **FEKI, Afef**
  **Sceaux (FR)**

(74) Representative: **Nokia EPO representatives
Nokia Technologies Oy
Karakaari 7
02610 Espoo (FI)**

(54) **DATA COLLECTION QUALITY INDICATION IN AI/ML POSITIONING**

(57)    Example embodiments of the present disclosure are related to data collection quality indication in artificial intelligence/machine learning, AI/M, positioning. A first apparatus obtains a monitoring metric for an AI/ML model that is configured for direct positioning or assisted positioning of a terminal device within a communication network, the monitoring metric being determined based on an error between a positioning inference result of the AI/ML model for a model input and a ground-truth positioning label for the model input within a monitoring dataset; determines a monitoring quality criteria for the monitoring dataset based on a spatial label analysis, SLA, indicator and a minimum inference error, MIE, indicator of the monitoring dataset; and in accordance with a determination that a monitoring quality criteria is dissatisfied by the monitoring metric, determines an action is to be applied on the AI/ML model.

EP 4 603 863 A1

**Description**

**CROSS-REFERENCE TO RELATED APPLICATION**

This application claims priority to, and the benefit of, Finland Application No. 20245161, filed February 16, 2024, the contents of which are hereby incorporated by reference in their entirety.

**FIELD**

Various example embodiments of the present disclosure generally relate to the field of telecommunication and in particular, to methods, devices, apparatuses and computer readable storage medium for data collection quality indication in artificial intelligence/machine learning (AI/ML) positioning.

**BACKGROUND**

In the telecommunication industry, artificial intelligence/machine learning (AI/ML) models have been employed in telecommunication systems to improve the performance. For example, the 3rd Generation Partnership Project (3GPP) Release-18 finalized the first study on Artificial Intelligence (AI)/Machine Learning (ML) for New Radio (NR). As a consequence, the 3GPP Release-19 started the work item on AI/ML for NR. The goal is to explore and standardize the benefits of features assessing a collected dataset used in AI/ML positioning. It also aims to guarantee a fair monitoring metric for ground truth-based performance monitoring.

**SUMMARY**

In a first aspect of the present disclosure, there is provided a first apparatus. The first apparatus comprises at least one processor; and at least one memory storing instructions that, when executed by the at least one processor, cause the first apparatus at least to: obtain a monitoring metric for an artificial intelligence/machine learning (AI/ML) model that is configured for direct positioning or assisted positioning of a terminal device within a communication network, the monitoring metric being determined based on an error between a positioning inference result of the AI/ML model for a model input and a ground-truth positioning label for the model input within a monitoring dataset; determine a monitoring quality criteria for the monitoring dataset based on a spatial label analysis (SLA) indicator and a minimum inference error (MIE) indicator of the monitoring dataset, the SLA indicator indicating a spatial distribution of the monitoring dataset, the MIE indicator indicating an inference error obtained by the AI/ML model using the monitoring dataset in a training phase; and in accordance with a determination that a monitoring quality criteria is dissatisfied by the monitoring metric, determine an action is to be applied on the AI/ML model.

In a second aspect of the present disclosure, there is provided a method. The method comprises: obtaining a monitoring metric for an artificial intelligence/machine learning (AI/ML) model that is configured for direct positioning or assisted positioning of a terminal device within a communication network, the monitoring metric being determined based on an error between a positioning inference result of the AI/ML model for a model input and a ground-truth positioning label for the model input within a monitoring dataset; determining a monitoring quality criteria for the monitoring dataset based on a spatial label analysis (SLA) indicator and a minimum inference error (MIE) indicator of the monitoring dataset, the SLA indicator indicating a spatial distribution of the monitoring dataset, the MIE indicator indicating an inference error obtained by the AI/ML model using the monitoring dataset in a training phase; and in accordance with a determination that a monitoring quality criteria is dissatisfied by the monitoring metric, determining an action is to be applied on the AI/ML model.

In a third aspect of the present disclosure, there is provided a first apparatus. The first apparatus comprises means for obtaining a monitoring metric for an AI/ML model that is configured for direct positioning or assisted positioning of a terminal device within a communication network, the monitoring metric being determined based on an error between a positioning inference result of the AI/ML model for a model input and a ground-truth positioning label for the model input within a monitoring dataset; means for determining a monitoring quality criteria for the monitoring dataset based on a spatial label analysis (SLA) indicator and a minimum inference error (MIE) indicator of the monitoring dataset, the SLA indicator indicating a spatial distribution of the monitoring dataset, the MIE indicator indicating an inference error obtained by the AI/ML model using the monitoring dataset in a training phase; and means for, in accordance with a determination that a monitoring quality criteria is dissatisfied by the monitoring metric, determining an action is to be applied on the AI/ML model.

In a fourth aspect of the present disclosure, there is provided a computer readable medium. The computer readable medium comprises instructions stored thereon for causing an apparatus to perform at least the method according to the second aspect.

It is to be understood that the Summary section is not intended to identify key or essential features of embodiments of the present disclosure, nor is it intended to be used to limit the scope of the present disclosure. Other features of the present disclosure will become easily comprehensible through the following description.

## BRIEF DESCRIPTION OF THE DRAWINGS

Some example embodiments will now be described with reference to the accompanying drawings, where:

FIG. 1 illustrates an example communication environment in which example embodiments of the present disclosure can be implemented;

FIG. 2 illustrates a flowchart of a method implemented at a Location Management Function (LMF) device in accordance with some example embodiments of the present disclosure;

FIGS.3A-3C illustrate examples of different data spatial distributions;

FIG. 4 illustrates a flowchart of a performance monitoring method implemented at a first apparatus in accordance with some example embodiments of the present disclosure;

FIG. 5 illustrates a signaling flow for a performance monitoring procedure in accordance with some example embodiments of the present disclosure;

FIG. 6 illustrates a signaling flow for a performance monitoring procedure in accordance with some example embodiments of the present disclosure;

FIG. 7 illustrates a flowchart of a method implemented at a first apparatus in accordance with some example embodiments of the present disclosure;

FIG. 8 illustrates a simplified block diagram of a device that is suitable for implementing example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first," "second,"..., etc. in front of noun(s) and the like may be used herein to describe various elements, these elements should not be limited by these terms. These terms are only used to distinguish one element from another and they do not limit the order of the noun(s). For example, a first element could be termed a second element, and similarly, a second element could be termed a first element, without departing from the scope of example embodiments. As used herein, the term "and/or" includes any and all combinations of one or more of the listed terms.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used herein, unless stated explicitly, performing a step "in response to A" does not indicate that the step is performed immediately after "A" occurs and one or more intervening steps may be included.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the fifth generation (5G), the sixth generation (6G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node. In some example, a network device may include a core network (CN) device. The core network includes one more core network devices or devices that are structured with hardware and software components. Features of these components may be substantially similar to those described with respect to the UEs, network devices, and/or hosts, such that the descriptions thereof are generally applicable to the corresponding components of the core network device. Example core network devices include functions of one or more of Location Management Function (LMF), Mobile Switching Center (MSC), Mobility Management Entity (MME), Home Subscriber Server (HSS), Access and Mobility Management Function (AMF), Session Management Function (SMF), Authentication Server Function (AUSF), Subscription Identifier De-concealing function (SIDF), Unified Data Management (UDM), Security Edge Protection Proxy (SEPP), Network Exposure Function (NEF), and/or User Plane Function (UPF).

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user equipment" and "UE" may be used interchangeably.

As used herein, the term "resource," "transmission resource," "resource block," "physical resource block" (PRB), "uplink resource," or "downlink resource" may refer to any resource for performing a communication, for example, a communication between a terminal device and a network device, such as a resource in time domain, a resource in frequency domain, a resource in space domain, a resource in code domain, or any other combination of the time, frequency, space and/or code domain resource enabling a communication, and the like. In the following, unless explicitly stated, a resource in both frequency domain and time domain will be used as an example of a transmission resource for describing some example embodiments of the present disclosure. It is noted that example embodiments of the present disclosure are equally applicable to other resources in other domains.

As used herein, the term "model" is referred to as an association between an input and an output learned from training data, and thus a corresponding output may be generated for a given input after the training. The generation of the model may be based on machine learning (ML) techniques. The machine learning techniques may also be referred to as artificial intelligence (AI) techniques. In general, a machine learning model can be built, which receives input information and makes predictions based on the input information. For example, a classification model may predict a class of the input information among a predetermined set of classes. As used herein, "model" may also be referred to as "machine learning model", "learning model", "machine learning network", or "learning network," which are used interchangeably herein.

To facilitate understanding of the terminologies, some definitions of the list of terminologies used for AI/ML are provided below.

AI/ML Model: A data driven algorithm that applies AI/ML techniques to generate a set of outputs based on a set of inputs.

AI/ML model delivery: A generic term referring to delivery of an AI/ML model from one entity to another entity in any manner. Note: An entity could mean a network node/function (e.g., gNB, an LMF, etc.), UE, proprietary server, etc.

AI/ML model Inference: A process of using a trained AI/ML model to produce a set of outputs based on a set of inputs.

AI/ML model testing: A subprocess of training, to evaluate the performance of a final AI/ML model using a dataset different from one used for model training and validation. Differently from AI/ML model validation, testing does not assume subsequent tuning of the model.

AI/ML model training: A process to train an AI/ML Model [by learning the input/output relationship] in a data driven manner and obtain the trained AI/ML Model for inference.

Data collection: A process of collecting data by the network nodes, management entity, or UE for the purpose of AI/ML model training, data analytics and inference.

Functionality identification: A process/method of identifying an AI/ML functionality for the common understanding between the network and the UE. Note: Information regarding the AI/ML functionality may be shared during functionality identification. Where AI/ML functionality resides depends on the specific use cases and sub use cases.

Network-side (AI/ML) model: An AI/ML Model whose inference is performed entirely at the network.

Semi-supervised learning: A process of training a model with a mix of labelled data and unlabelled data.

Supervised learning: A process of training a model from input and its corresponding labels.

UE-side (AI/ML) model: An AI/ML Model whose inference is performed entirely at the terminal device or UE.

Unsupervised learning: A process of training a model without labelled data.

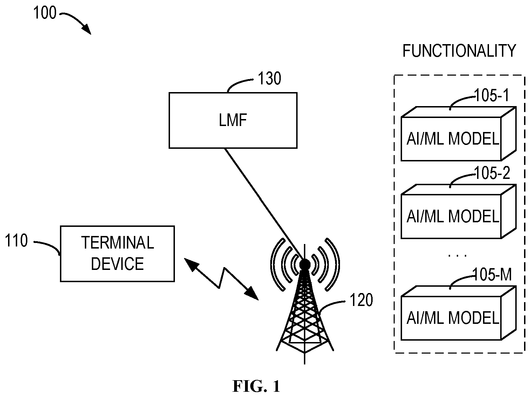

FIG. 1 illustrates an example communication environment 100 in which example embodiments of the present disclosure can be implemented. It is to be understood that the elements shown in the communication environment 100 are intended to represent main functions provided within the system. As such, the blocks shown in FIG. 1 reference specific elements in communication networks that provide these main functions. However, other network elements may be used to implement some or all of the main functions represented. Also, it is to be understood that not all functions of a communication network are depicted in FIG. 1. Rather, functions that facilitate an explanation of illustrative embodiments are represented. Further, the number of the elements shown in FIG. 1 is also for the purpose of illustrative only and there may be any number of elements.

As shown, the communication environment 100 comprises a plurality of communication devices, including a terminal device 110 and a network device 120, e.g., a radio access network (RAN) device. A serving area of the network device 120 may be called a cell. The terminal device 110 and the network device 120 may operate in a RAN. Although one terminal device (e.g., the terminal device 110) is illustrated, there may be more or less terminal devices within a serving area of a network device, and there may also be more network devices serving the terminal devices in the communication environment 100.

In the following, for the purpose of illustration, some example embodiments are described with the terminal device 110 operating as a terminal device and the network device 120 operating as a network device. However, in some example embodiments, operations described in connection with a terminal device may be implemented at a network device or other device, and operations described in connection with a network device may be implemented at a terminal device or other device.

In some example embodiments, if the terminal device 110 is a terminal device and the network device 120 is a network device, a link from the network device 120 to the terminal device 110 is referred to as a downlink (DL), and a link from the terminal device 110 to the network device 120 is referred to as an uplink (UL). In DL, the network device 120 is a transmitting (TX) device (or a transmitter) and the terminal device 110 is a receiving (RX) device (or a receiver). In UL, the terminal device 110 is a TX device (or a transmitter) and the network device 120 is a RX device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

In some example embodiments, one or more AI/ML models 105-1, 105-2, ..., 105-M (collectively or individually referred to as AI/ML models 105) may be configured, e.g., as a functionality. An AI/ML model 105 may sometimes be referred to as an AI model or an ML model for short. Different AI/ML models 105 may be configured to implement the same different algorithms in the communication environment 100. In the positioning scenario, the AI/ML model(s) 105 may be configured for direct positioning or assisted positioning of a terminal device within a communication network. Inference, testing, training, and/or validation of an AI/ML model 105 may be performed at the terminal device 110, the network device 120, and/or other entities such as a LMF 130. An AI/ML model 105 may be delivered from one entity to another entity in any manner. Delivery of an AI/ML model 105 over the air interface in a manner that is not transparent to 3GPP signalling, either parameters of a model structure known at the receiving end or a new model with parameters. Delivery may contain a full model or a partial model.

The LMF 130 may be an entity that implements location management service. The LMF 130 may be a network node in the RAN or in the core network, or may be an external entity. In some example embodiments, the LMF 130 may be able to communicate with the network device 120 (e.g., a RAN network device).

A data collection process is usually required to collect data by the network devices, management entity, or terminal devices for the purpose of AI/ML model training, data analytics and inference. Data collection for an AI/ML model may be referred to as "AI/ML-related data collection" herein. For a specific AI/ML model(s), the AI/ML-related data collection may be performed at the terminal device 110, the network device 120, and/or other entities such as a LMF 130.

AI/ML positioning was approved to be part of the normative work. Positioning accuracy enhancements related to AI/ML positioning are as below in Table 1.

Table 1

| |
|---|
| - Positioning accuracy enhancements, encompassing:<br>  ◦ Direct AI/ML positioning:<br>    ▪ (1st priority) Case 1: UE-based positioning with UE-side model, direct AI/ML positioning<br>    ▪ (2nd priority) Case 2b: UE-assisted/LMF-based positioning with LMF-side model, direct AI/ML positioning<br>    ▪ (1st priority) Case 3b: NG-RAN node assisted positioning with LMF-side model, direct AI/ML positioning<br>  ◦ AI/ML assisted positioning<br>    ▪ (2nd priority) Case 2a: UE-assisted/LMF-based positioning with UE-side model, AI/ML assisted positioning<br>    ▪ (1st priority) Case 3a: NG-RAN node assisted positioning with gNB-side model, AI/ML assisted positioning<br>  ◦ Specify necessary measurements, signalling/mechanism(s) to facilitate Life Cycle Management (LCM) operations specific to the Positioning accuracy enhancements use cases, if any<br>  ◦ Investigate and specify the necessary signalling of necessary measurement enhancements (if any)<br>  ◦ Enabling method(s) to ensure consistency between training and inference regarding network-side additional conditions (if identified) for inference at UE for relevant positioning sub use cases |

Herein, the following sub-use cases are prioritized: 1) Case 1 with AI/ML model in UE-side for direct positioning; Case 3a with AI/ML model in gNB-side for assisted positioning; and Case 3b with AI/ML model in LMF-side for direct positioning.

In addition, the following request is defined on performance monitoring as below in Table 2.

Table 2

| |
|---|
| Provide specification support for the following aspects:<br>- AI/ML general framework for one-sided AI/ML models:<br>  ◦ Signalling and protocol aspects of LCM enabling functionality and model (if justified) selection, activation, de-activation, switching, fallback<br>    ▪ Identification related signalling is part of the above objective<br>  ◦ Necessary signalling/mechanism(s) for LCM to facilitate model training, inference, performance monitoring, data collection (except for the purpose of Core Network (CN)/ Operation Administration and Maintenance (OAM)/ Over the Top (OTT) collection of UE-sided model training data) for both UE-sided and network-sided models<br>  ◦ Signalling mechanism of applicable functionalities/models |

As a complement, some agreements related to monitoring are as below in Table 3.

Table 3

| |
|---|
| Agreement<br>Regarding AI/ML model monitoring for AI/ML based positioning, to study and provide inputs on benefit(s), feasibility, necessity and potential specification impact for the following aspects<br>• Entity to derive monitoring metric<br>  ◦ UE at least for Case 1 and 2a (with UE-side model)<br>    ▪ Positioning Reference Unit (PRU) for Case 1 and 2a for further study<br>  ◦ gNB at least for Case 3a (with gNB-side model)<br>    ▪ gNB for Case 3b (with LMF-side model) for further study<br>  ◦ LMF at least for Case 2b and 3b (with LMF-side model)<br>  ◦ Note1: companies are requested to report their assumption of entity to calculate monitoring metric if different from above options for each of the agreed cases (Case 1 to Case 3b)<br>• If model monitoring does not require ground truth label (or its approximation).<br>  ◦ Monitoring metric, e.g., statistics of measurement, relative displacement, inference output inconsistency, etc.<br>  ◦ Assistance signaling and procedure, e.g., Reference Signal (RS) configuration(s) for measurement, measurement statistics as compared to the model input statistics of the training data, etc.<br>  ◦ report of the calculated metric and/or model monitoring decision<br>• If model monitoring requires and is provided ground truth label (or its approximation)<br>  ◦ Monitoring metric, e.g., statistics of the difference between model output and ground truth label, etc.<br>  ◦ Assistance signaling and procedure, e.g., from LMF to UE/gNB indicating ground truth label and/or measurement, etc.<br>  ◦ report of the calculated metric and/or model monitoring decision<br>• Note2: other options (of monitoring methods, monitoring metrics, assistance signaling) are not precluded |

Some further agreements related to ground truth label generation are as below in Table 4.

Table 4

| |
|---|
| Agreement |

(continued)

Regarding ground truth label generation for AI/ML based positioning, the following options of entity to generate ground truth label are identified when beneficial and necessary (e.g., limited PRU availability)

• UE with estimated/known location generates ground truth label and corresponding label quality indicator
  ◦ based on non-NR and/or NR Radio Access Technology (RAT)-dependent and/or NR RAT-independent positioning methods
  ◦ At least for UE-based positioning with UE-side model (Case 1) and UE-assisted positioning with UE-side model (Case 2a)

• Network entity generates ground truth label and corresponding label quality indicator
  ◦ based on non-NR and/or NR RAT-dependent and/or NR RAT-independent positioning methods
  ◦ At least for UE-assisted/LMF-based positioning with LMF-side model (Case 2b), NG-RAN node assisted positioning with gNB-side model (Case 3a) and NG-RAN node assisted positioning with LMF-side model (Case 3b)

• Note: user data privacy needs to be preserved.

Agreement

Regarding monitoring for AI/ML based positioning, at least the following monitoring methods with potential specification impact are identified

• Model monitoring based on provided ground truth label (or its approximation)
  ◦ Monitoring metric: statistics of the difference between model output and provided ground truth label
    ▪ details of statistics for further study
  ◦ For monitoring UE-side and gNB-side model
    ▪ signaling from monitoring entity to request ground truth label (if needed)
    ▪ signaling from monitoring entity to request model output (if needed)
    ▪ signaling for potential request/report of monitoring metric (if needed)
    ▪ Note: there may not be any specification impact
  ◦ For monitoring LMF-side model
    ▪ signaling from LMF to request measurement(s) (if needed)
  ◦ applicability to each case (Case 1 to 3b) for further study

• Model monitoring without ground truth label
  ◦ Monitoring metric:
    ▪ statistics of measurement(s) compared to the statistics associated with the training data, statistics associated with the model output for further study
    ▪ details of statistics for further study
    ▪ details of what type of measurement(s) for further study
  ◦ For monitoring UE-side and gNB-side model
    ▪ signaling from LMF to facilitate the monitoring entity to derive the monitoring metric (if needed)
    ▪ signaling from monitoring entity to request measurement(s) (if needed)
    ▪ signaling for potential request/report of monitoring metric (if needed)
    ▪ Note: there may not be any specification impact

(continued)

| | |
|---|---|
| ◦ For monitoring LMF-side model | |
| | ▪ signaling from LMF to request measurement(s) (if needed) |
| ◦ applicability to each case (Case 1 to 3b) for further study | |

In some legacy technical solutions, there is a solution that provides a monitoring device, a monitoring method, and a computer program for evaluating a risk of causing an abnormality or a failure. Specifically, in this solution, a monitoring device includes: a data collection unit for collecting system status information of a monitoring target system; a machine learning unit in which a normal state is learned in advance by machine learning based on the system status information collected by the data collection unit; and a risk evaluation unit for evaluating a risk of the monitoring target system based on current system state information collected by the data collection unit and the normal state learned in advance by the machine learning.

In another solution, a method is proposed for analyzing big data and monitoring performance based on machine learning, in which data analysis management is easy. The method includes the following steps: receiving front-end and back-end frameworks; defining settings for the data collection method, a database, table information, field information, and an integrated database; defining methods and parameters for data analysis; analyzing information collected during a specified period according to a set rule; defining an input layer, a hidden layer, a learning model, and a parameter; performing machine learning; generating a report; collecting data corresponding to the set keyword; classifying to match a preset value and storing the data in the database; generating analysis information; performing machine learning on the collected data or classified data; and generating and transmitting a report.

However, the above-mentioned solutions do not consider the quality of collected data for monitoring purpose, specifically for the AI/ML based UE positioning case.

For AI/ML-based positioning, the availability of labelled data is mandatory because it uses supervised learning methodology. In addition, some indicators were mentioned to guarantee an optimal inference performance. Specifically, for data collection purposes, the dataset size and the distribution of labels (positions of UEs) following the uniform distribution are dataset quality indicators together. The dataset size has a trivial quantified value based on the number of samples. However, there is not a quantitative reference to assess the uniform distribution.

Thus, the following problem need to be tackled: how to assess and ensure a quantitative value of qualitative data collection for efficient ML model training, which is aimed at ML based UE positioning use case in realistic conditions, how to ensure ground truth-based monitoring using the dataset quality indicator and how to guarantee a fair monitoring metric for ground truth-based monitoring.

According to some example embodiments of the present disclosure, there is provided a solution for quantifying the quality of data collection and related signaling enhancement thereof. Besides, a dataset quality indicator (which is also referred to as a quantitative quality label indicator) is proposed to provide fundamental information to assist performance monitoring based on ground truth. In this solution, a first apparatus obtains a monitoring metric for an AI/ML model and determines a monitoring quality criteria for a monitoring dataset based on the dataset quality indicator, which includes a spatial label analysis (SLA) indicator and a minimum inference error (MIE) indicator of the monitoring dataset. If the monitoring quality criteria is dissatisfied by the monitoring metric, the first apparatus determines an action is to be applied on the AI/ML model. This solution provides an accurate and realistic performance monitoring based on ground truth using a quantitative quality label indicator. In this regard, this quantitative quality label indicator works in both data collection and performance monitoring.

Example embodiments of the present disclosure will be described in detail below with reference to the accompanying drawings.

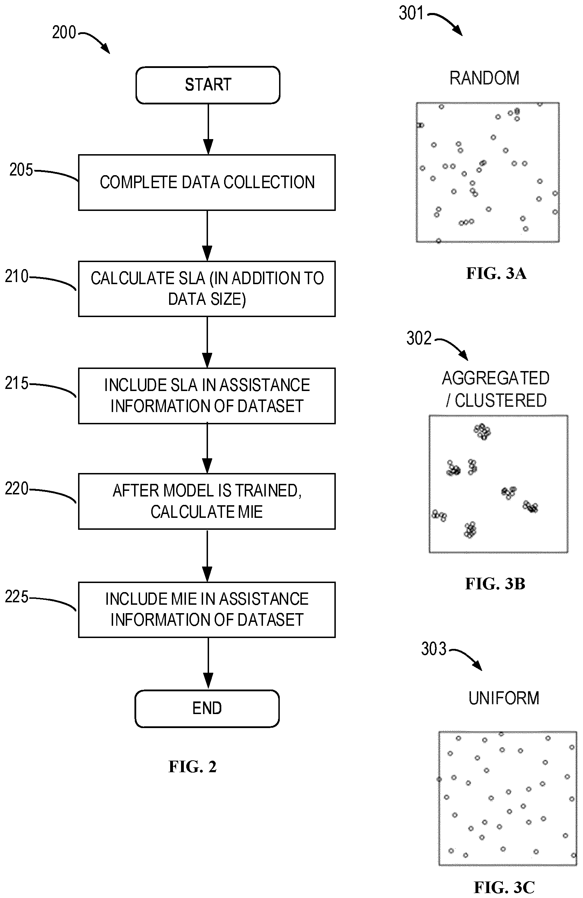

FIG. 2 illustrates a flowchart of a method 200 for obtaining quality indication of a dataset for an AI/ML model in accordance with some example embodiments of the present disclosure. In some example embodiments, the method 200 may be implemented offline for a dataset of an AI/ML model. The method 200 may be implemented at any suitable entity, such as a network entity, e.g., a LMF. The LMF may be an example of the LMF 130 in FIG.1. In the following description, for the purpose of illustration only, the method 200 is described from the perspective of the LMF. Although steps in FIG. 2 are described as being performed by the LMF for illustrative purposes, these steps may also be performed by the other entities, such as the terminal device 110 (e.g., a UE or a PRU) and the network device 120 (e.g., a gNB).

At block 205, the LMF 130 completes data collection. That is, one or more datasets are collected for AI/ML model training. The dataset task of the data collection is done using any suitable conventional method, for example, a method via a PRU or a terminal device with known positions. The conventional method also includes a potential method to optimize the data collection. Herein, a diversity of methodologies on data collection at UE-side or network-side may be considered, including aspects of data mixed datasets and other important aspects. A collected dataset may include a number of data samples, each data sample including a model input to an AI/ML model that is configured for direct positioning or assisted positioning, and a corresponding ground-truth positioning label for the model input. The ground-truth positioning label may be the direct positioning result or the assisted positioning result, depending on the type of the AI/ML model.

A task related to gathering information from different sources is finalized at block 205. Thus, information as the dataset size (in terms of number of samples) is already known and is always fixed. However, a label distribution of terminal devices is not guaranteed, which represent a realistic assumption.

At block 210, in addition to the data size, the LMF 130 calculates a spatial label analysis (SLA) indicator to quantify the quality of the collected dataset. At block 210, the collected dataset is analyzed to obtain the SLA indicator, for example, a spatial point process, and a quality metric is estimated. The SLA indicator can be calculated to indicate a spatial distribution of the collected dataset. The entire dataset is analyzed to determine if a label distribution of terminal devices in the collected dataset follows a uniform distribution, which may be indicated with the SLA indicator. A condition to guarantee a high training performance is that the dataset must follow a uniform distribution, the SLA indicator may be considered as a data quality indicator of one specific dataset. The SLA indicator can also be referred to as a quality indicator or a dataset quality indicator.

The SLA indicator may be based on a spatial point process and any other methods, which indicates the level of similarity of labels distribution between two different datasets. For example, 'localized' collected measurements are examined as a spatial point process. A relevant test may be applied to provide an indication on how these measurements are geographically dispatched within the region of interest. In some example embodiments, the SLA indicator is determined at least in part based on a similarity between a distribution of ground-truth positioning labels in the monitoring dataset and a reference distribution. The reference distribution may be a uniform distribution, or any other reference distribution such as a random distribution or a clustered distribution. More precisely, a spatial point pattern test can be applied to identify the spatial distribution of the measurements as shown in FIGS.3A-3C. FIG. 3A illustrates an example 301 of a random data spatial distribution, in which positioning points are located without explicit relationship. FIG. 3B illustrates an example 302 of an aggregated/clustered data spatial distribution, in which positioning points are gathered in clusters. FIG. 3C illustrates an example 303 of a uniform data spatial distribution, in which positioning points are distributed in a regular fashion following a random distribution.

To calculate the SLA indicator, the test on the spatial point pattern is performed to check if it corresponds to a complete spatial random (CSR) process. The CSR process is defined as a realization of a homogeneous Poisson (HP) process. The HP process is considered as a reference model, which is defined as a point process satisfying the following conditions: 1) the number of points within a spatial area A following a Poisson distribution characterized by a rate parameter $\lambda|A|$ (with $|A|$ referring to the area of A and $\lambda$ is the mean number of points per unit area, generally called as the intensity), and 2) the point being spread out independently within the spatial area A. This is equivalent to that the numbers of points in separate regions are independent.

Therefore, on a given area, the CSR hypothesis may be tested using conventional methods based on the distance $d$ between points. Functional summary statistics can evaluate dispersion and interaction between the points within the area of interest. In the following, the function J is used to determine the pattern distribution. For a CSR process, the function J equals to 1. Empirical values larger than 1 are indicative of uniformity, while values below 1 suggest clustering.

The function J is a ratio of the hazard functions defined for function G and function F:

$$J(d) = \frac{1 - G(d)}{1 - F(d)}$$

where function G(d) is the nearest neighbour distance distribution function and function F(d) is an empty space function.

Therefore, the SLA indicator (e.g., a result of the J function) may be used as a quality indicator of collected dataset.

At block 215, the LMF 130 includes the SLA indicator in assistance information of the collected dataset. It is expected that every dataset has assistance information with important information describing important characteristics, for example, a dataset quality indicator. The assistance information may sometimes be referred to as metadata information of the dataset. The SLA indicator is included in the corresponding assistance information of the collected dataset. For this purpose, the quantitative value of the SLA indicator is stored in the corresponding assistance information of the dataset. This assistance information is an information that may be used between entities without delivering or transferring the dataset itself.

After the AI/ML model for direct positioning or assisted positioning is trained, the LMF 130 calculates a minimum inference error (MIE) indicator after the model training at block 220 and include the MIE indicator in the assistance information of the dataset as block 225. The subset of the collected dataset for testing may be used to calculate the MIE indicator. The MIE indicator indicates an inference error obtained by the AI/ML model using the monitoring dataset in a training phase of the AI/ML model. In some example embodiments, the MIE indicator is determined by using at least one subset of the monitoring dataset to monitor the AI/ML model in a monitoring phase.

The MIE indicator is mapped to their respective data quality indicator, SLA ,and is included in the assistance information of the dataset. In other words, mapping information is generated between the MIE indicator and the respective SLA indicator to characterize the dataset. Examples of mappings between the MIE indicator and the respective SLA indicator for available datasets are shown in Table 5. As can be seen, the MIE indicator is usually low when the SLA indicator is greater than 1.

Table 5

| Datasets | SLA indicator (w/o unit) | MIE indicator (in meters) |
| --- | --- | --- |
| Dataset 1 | 1.1 | 0.5 |
| Dataset 2 | 0.9 | 0.75 |
| Dataset 3 | 0.6 | 1.3 |
| Dataset 4 | 1.7 | 0.125 |

As described above, FIG.2 illustrates main steps performed by the LMF and how the dataset quality indicator obtained after the data collection impacts the generation of the assistance information (SLA and MIE indicators) to be used in the following performance monitoring.

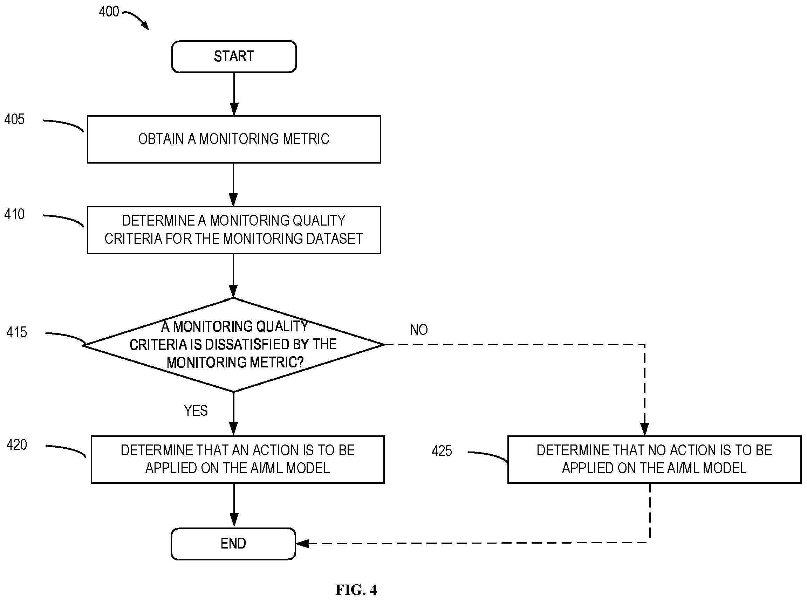

FIG. 4 illustrates a flowchart of a performance monitoring method 400 implemented at a first apparatus in accordance with some example embodiments of the present disclosure. For the purposes of discussion, the method 400 will be discussed with reference to FIG. 1 and may be implemented at the first apparatus in FIG. 1.

In some example embodiments, the first apparatus may be a terminal device (for example, a UE) or comprised in a terminal device (for example, a UE). In some example embodiments, the first apparatus may be or may be comprised in a RAN network entity or a CN network entity, such as the LMF 130, the network device 130 in FIG. 1, or any other network element.

Two methodologies for performance monitoring of an AI/ML model are proposed. One is strongly dependent of the existence of ground-truth labels and other is independent of ground-truth labels. FIG. 4 focuses on the methodology in which ground truth is required. In addition, an example LCM-based functionality framework is considered as a base line to indicate the signalization corresponding to the performance monitoring procedure.

As shown in FIG. 4, at block 405, the first apparatus obtains a monitoring metric (MM) for an AI/ML model or AI/ML functionality. The AI/ML model or functionality is configured for direct positioning or assisted positioning of a terminal device within a communication network. One or more AI/ML models may be included in a positioning functionality. In the following, it refers to AI/ML model for the ease of discussion and each time the AI/ML model is referred to, it may be replaced with AI/ML functionality as well.

The MM is determined based on an error between a positioning inference result of the AI/ML model for a model input and a ground-truth positioning label for the model input within a monitoring dataset. In some example embodiments, the performance monitoring procedure based on ground truth is performed in the first apparatus and the MM may be calculated in a UE-side.

At block 410, the first apparatus determines a monitoring quality criteria for the monitoring dataset. The monitoring quality criteria is determined based on an SLA indicator and an MIE indicator of the monitoring dataset. As described above, the SLA indicator indicates a spatial distribution of the monitoring dataset and the MIE indicator indicates an inference error obtained by the AI/ML model using the monitoring dataset in a training phase.

In some example embodiments, the SLA may be determined at least in part based on a similarity between a distribution of ground-truth positioning labels in the monitoring dataset and a reference distribution. Alternatively or in addition, the MIE indicator may be determined by using at least one subset of the monitoring dataset to monitor the AI/ML model in a monitoring phase. Specifically, as described in block 220 in FIG.2, after the AI/ML model is trained, the subset of a collected dataset for testing is used to calculate the MIE.

In some example embodiments, the monitoring dataset may be collected during a training phase of the AI/ML model and may be used for monitoring of the AI/ML model. It is noted that the dataset may be collected during the training stage of the model and/or when the model is already deployed in the field, thus this dataset in this case is a consequence of a data collection for only monitoring purposes. Alternatively or in addition, the SLA indicator and the MIE indicator of the monitoring dataset may be indicated in mapping information between monitoring datasets, SLA indicators, and MIE indicators. In further example embodiments, the SLA indicator and the MIE indicator may be included in assistance information associated with the monitoring dataset.

In some example embodiments, a granularity monitoring sensitivity (GMS) may be represented by different values. In some example embodiments, the first apparatus may determine the GMS level mapped to the SLA indicator based on a mapping between SLA indicators and GMS levels. For instance, if SLA < 1, GMS = 8 and if SLA > 1, GMS = 1.

In some example embodiments, the first apparatus may determine the monitoring quality criteria for the monitoring dataset based on the determined GMS level and the MIE indicator. For example, the monitoring quality criteria may be a product of the GMS and the MIE, that is, GMS x MIE.

At block 415, the first apparatus may determine whether the monitoring quality criteria is dissatisfied by the MM. If the monitoring quality criteria is dissatisfied by the MM (e.g., if MM is larger than GMS x MIE), the first apparatus determines that an action is to be applied on the AI/ML model at block 420. If the monitoring quality criteria is satisfied by the MM, the first apparatus may determine that no action is to be applied on the AI/ML model at block 425.

In some example embodiments, the MM or corresponding error location of a terminal device may be compared to the SLA and/or MIE in the assistance information based on the monitoring quality criteria. In some example embodiments, if the MM > GMS x MIE, the performance monitoring procedure may determine that the monitoring quality criteria is dissatisfied by the MM and the first apparatus may indicate to an LMF that an action is needed on the AI/ML model. And if the MM < GMS x MIE, the performance monitoring procedure may determine that the monitoring quality criteria is satisfied by the MM and the first apparatus may indicate to the LMF that no further action is needed on the AI/ML model. In further example embodiments,

In further example embodiments, if the value for the MM obtained during the performance monitoring procedure is not in a range defined the MIE, the performance monitoring procedure may determine that the monitoring quality criteria is dissatisfied by the MM and the first apparatus may indicate that other actions are required on the AI/ML model and/or the positioning functionality. If a value for the MM obtained during the performance monitoring procedure is in the range defined by the MIE, the performance monitoring procedure may determine that the monitoring quality criteria is satisfied by the MM and the first apparatus may indicate that no further action is needed.

In some example embodiments, the first apparatus may comprise a terminal device, and the AI/ML model may be deployed at the terminal device. In this case, the first apparatus may further receive first configuration information from a network device. The first configuration information may indicate the positioning functionality at least based on capability of the terminal device, the AI/ML model and/or assistance information for the positioning functionality. The assistance information may include at least the assistance information associated with the monitoring dataset.

Specifically, the performance monitoring of a specific functionality may be performed. Herein, the first apparatus may report a set of conditions to the LMF. The LMF may determine the positioning functionality based on the set of conditions. That is, based on the set of conditions reported by the terminal device 110, the functionality is determined, which includes dataset assistance information for a specific site. For this specific case, the assistance information of the dataset, including SLA and the MIE information generated in the data collection. Herein, it is expected that the first apparatus may select a potential best model fitting on their own criteria.

Alternatively, the first apparatus may comprise a terminal device, and the AI/ML model may be deployed at a network device, e.g., at an LMF or any other network device (e.g. a gNB). In this case, the first apparatus may further receive second configuration information from the network device. The second configuration information may indicate a monitoring functionality for the AI/ML model.

Specifically, when the AI/ML model is deployed at the network device, the UE reports a set of conditions that the network device will select to determine a Functionality B for monitoring. If one condition of the set of conditions indicates that the first apparatus supports reporting radio measurements for inference purposes, the network device may determine a reporting monitoring method in the first apparatus in the scope of the Functionality B.

In some example embodiments, if a condition of the set of conditions indicates that the first apparatus supports performance monitoring procedure based on ground truth, the LMF may set a performance monitoring method in the first apparatus in a scope of the positioning functionality.

In further example embodiments, the first apparatus may transmit a request for a quality indicator of the monitoring dataset to the network device. Then, the first apparatus may receive, from the network device, the SLA indicator and the MIE indicator of the monitoring dataset. That is, after the performance monitoring method is set, the first apparatus may request assistance information related to the information of the SLA and/or MIE to the LMF. The assistance information indicates an ID of the dataset that was used for training. Then, the LMF may extract the SLA/MIE based on the ID of the dataset and return this information to the terminal device.

Further, if an action is to be applied on the AI/ML model, the first apparatus may transmit the MM to a network device for the network device to determine an action to be applied on the AI/ML model. Alternatively, the first apparatus may transmit an indication of the action to be applied to the network device. Specifically, for network-side monitoring or LMF-side monitoring, the first apparatus may report the MM. For UE-side monitoring, the first apparatus may report the monitoring decision.

According to the above example embodiments of the present disclosure, a dataset quality indicator is used to assist performance monitoring based on ground truth.

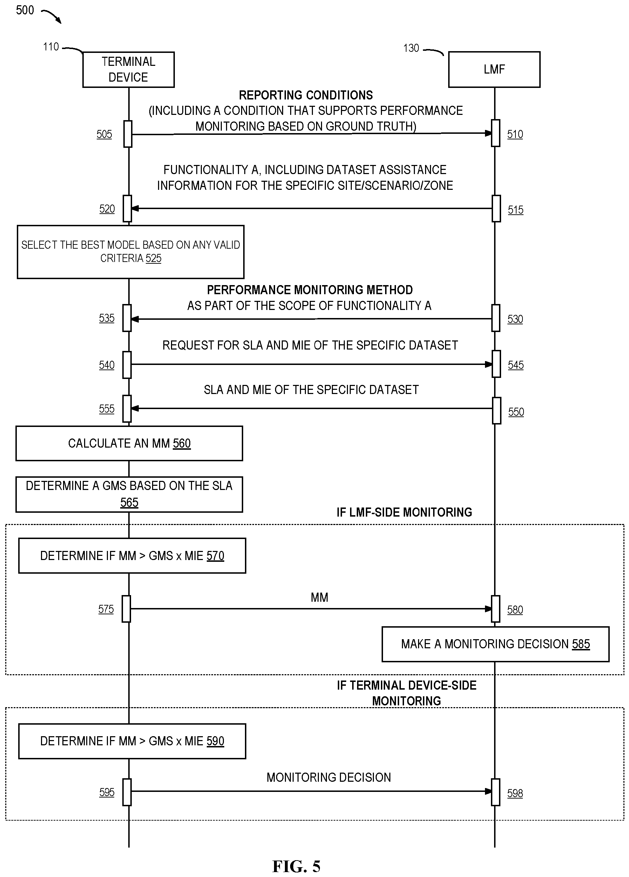

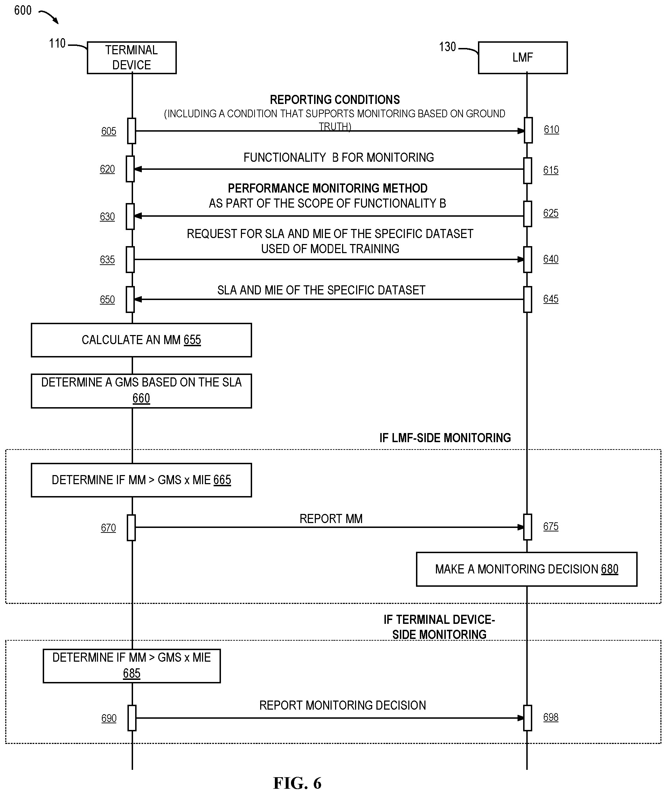

To better understand the example embodiments of the present disclosure, the method 400 will be described in some example LCM-based functionality frameworks with reference to FIG. 5 and FIG. 6.

FIG. 5 illustrates a signaling flow 500 for a performance monitoring procedure in accordance with some example embodiments of the present disclosure. For the purposes of discussion, the signaling flow 500 will be discussed with reference to FIG. 1. The signaling flow 500 may involve the terminal device 110 and the LMF 130 in FIG. 1. In some example embodiments, the terminal device 110 may be a terminal device (for example, a UE) or comprised in a terminal device (for example, a UE). The LMF 130 may be a LMF or comprised in a LMF.

It is to be understood that the signaling flow 500 may involve more apparatuses or less apparatuses, and the number of apparatuses illustrated in FIG. 5 is only for the purpose of illustration without suggesting any limitations.

In FIG. 5, it is assumed that the AI/ML model, which is configured for direct UE positioning or assisted UE positioning, is deployed at the terminal device 110, as an UE-side model.

As shown in FIG. 5, the terminal device 110 reports (505) conditions to the LMF 130. The conditions include a condition that supports performance monitoring based on ground-truth label. The LMF 130 receives (510) the conditions and determines a positioning functionality, for example, Functionality A including dataset assistance information for a specific site, scenario or zone.

Then, the LMF 130 transmits (515) the Functionality A including dataset assistance information for that specific site to the terminal device 110. The terminal device 110 receives (520) the Functionality A including dataset assistance information for that specific site and selects (525) the potential best model based on any criteria.

The LMF 130 determines a performance monitoring method as part of the scope of the Functionality A and transmits (530) the performance monitoring method to the terminal device 110. The terminal device 110 receives (535) the performance monitoring method and transmits (540) a request for the SLA indicator and the MIE indicator of the specific dataset.

The LMF 130 receives (545) the request and transmit (550) the SLA indicator and MIE indicator of the specific dataset to the terminal device 110. The terminal device 110 receives (555) the SLA indicator and MIE indicator of the specific dataset.

The terminal device 110 then calculates (560) a MM and determines (565) a GMS based on the SLA indicator. In some examples, if an LMF-side monitoring is performed, the terminal device 110 determines (570) if MM > GMS x MIE. If MM > GMS x MIE, the terminal device 110 reports (575) the MM to the LMF 130. The LMF 130 receives (580) the MM and makes (585) a monitoring decision. As an alternative, if a UE-side monitoring is performed, the terminal device 110 determines (590) if MM > GMS x MIE and makes the monitoring decision. The terminal device 110 then reports (595) the monitoring decision to the LMF 130. The LMF 130 receives (598) the monitoring decision and performs following actions.

According to the above example embodiments of the present disclosure, embodiments in which the AI/ML model is deployed in the terminal device and the MM is calculated in the UE side are described, and signalization details are shown. Potential new IEs in LTE Positioning Protocol (LPP) may be used in steps 515, 520, 530, 535, 540 and 545.

FIG. 6 illustrates a signaling flow 600 for a performance monitoring procedure in accordance with some example embodiments of the present disclosure. For the purposes of discussion, the signaling flow 600 will be discussed with reference to FIG. 1. The signaling flow 600 may involve the terminal device 110 and the LMF 130 in FIG. 1. FIG. 6 focuses on the methodology in which ground truth is required. In addition, an example LCM-based functionality framework is considered as a base line to indicate the signalization corresponding to the performance monitoring procedure. The difference between FIG. 6 and FIG. 5 is that, in FIG. 6, the AI/ML model is deployed at the LMF 130, as a LMF-side model.

It is to be understood that the signaling flow 600 may involve more apparatuses or less apparatuses, and the number of apparatuses illustrated in FIG. 6 is only for the purpose of illustration without suggesting any limitations.

In case that an AI/ML model is deployed in a network side (for example, a LMF or a gNB), the terminal device 110 reports (605) a set of conditions to the LMF 130. The set of conditions includes a condition that supports monitoring based on ground truth. The LMF 130 receives (610) the set of conditions. The LMF 130 determines a Functionality B for monitoring and transmits (615) the Functionality B for monitoring to the terminal device 110.

The LMF 130 determines a performance monitoring method as part of the scope of the Functionality B. The LMF 130 transmit (625) the performance monitoring method as part of the scope of the Functionality B to the terminal device 110. If a condition of the set of conditions indicates that the first apparatus supports reporting radio measurements for inference purposes, the LMF 130 determines a reporting monitoring method in the terminal device 110 in the scope of the Functionality B.

The terminal device 110 receives (630) the performance monitoring method and transmits (635) a request for the SLA and the MIE of the specific dataset used for model training. After the performance monitoring method is determined in the network side (for example, the LMF 130), the LMF 130 receives (640) the request and retrieves assistance information related to information of a quality indicator SLA and MIE, which indicates an ID of the specific dataset that was used for training of the AI/ML model. Based on the ID, the LMF 130 extracts the SLA and MIE and return this information to the terminal device 110. The LMF 130 transmit (645) the SLA and MIE of the specific dataset to the terminal device 110. In some example embodiments, if the dataset was collected during the monitoring, the LMF extracts the SLA from the collected dataset, and the MIE is set using a generic value (e.g., average between MIE of other available datasets).

The terminal device 110 receives (650) the SLA and MIE of the specific dataset. The terminal device 110 then calculates (655) an MM and determines (660) a GMS based on the SLA. In some cases, if an LMF-side monitoring is performed, the terminal device 110 determines (665) if MM > GMS x MIE. If MM > GMS x MIE, the terminal device 110 reports (670) the MM to the LMF 130. The LMF 130 receives (675) the MM and makes (680) a monitoring decision. As an alternative, if a UE-side monitoring is performed, the terminal device 110 determines (685) if MM > GMS x MIE and makes the monitoring decision. The terminal device 110 reports (690) the monitoring decision to the LMF 130. The LMF 130 receives (698) the monitoring decision.

According to the above example embodiments of the present disclosure, embodiments in which the AI/ML model is deployed in the network device (e.g., a LMF or a gNB) and the MM is calculated in the UE side are described, and signalization details thereof are shown. Potential new IEs in LPP may be used in steps 635, 640, 645 and 650.

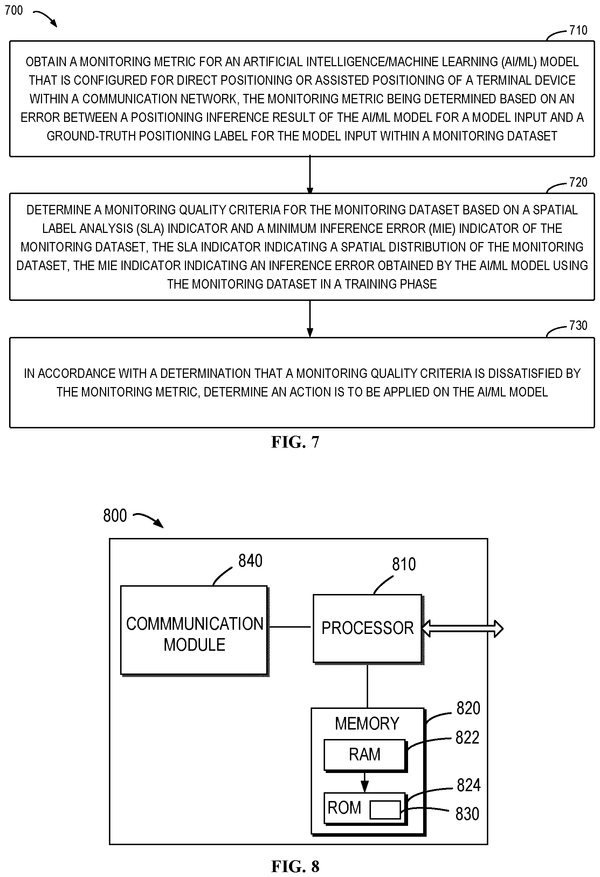

FIG. 7 shows a flowchart of an example method 700 implemented at a first device in accordance with some example embodiments of the present disclosure. For the purpose of discussion, the method 700 will be described from the perspective of the terminal device 110 in FIG. 1.

At block 710, the terminal device 110 obtains a monitoring metric for an artificial intelligence/machine learning (AI/ML) model that is configured for direct positioning or assisted positioning of a terminal device within a communication network, the monitoring metric being determined based on an error between a positioning inference result of the AI/ML model for a model input and a ground-truth positioning label for the model input within a monitoring dataset.

At block 720, the terminal device 110 determines a monitoring quality criteria for the monitoring dataset based on a spatial label analysis (SLA) indicator and a minimum inference error (MIE) indicator of the monitoring dataset, the SLA indicator indicating a spatial distribution of the monitoring dataset, the MIE indicator indicating an inference error obtained by the AI/ML model using the monitoring dataset in a training phase.

At block 730, in accordance with a determination that a monitoring quality criteria is dissatisfied by the monitoring metric, the terminal device 110 determines an action is to be applied on the AI/ML model.

In some example embodiments, the method 700 further comprises: in accordance with a determination that the monitoring quality criteria is satisfied by the monitoring metric, determining that no action is to be applied on the AI/ML mode.

In some example embodiments, the SLA indicator is determined at least in part based on a similarity between a distribution of ground-truth positioning labels in the monitoring dataset and a reference distribution. In some example embodiments, the MIE indicator is determined by using at least one subset of the monitoring dataset to monitor the AI/ML model in a monitoring phase.

In some example embodiments, the monitoring dataset is collected during a training phase of the AI/ML model and is used for monitoring of the AI/ML model; and/or wherein the SLA indicator and the MIE indicator of the monitoring dataset are indicated in mapping information between monitoring datasets, SLA indicators, and MIE indicators.

In some example embodiments, the SLA indicator and the MIE indicator are comprised in assistance information associated with the monitoring dataset.

In some example embodiments, the method 700 further comprises: receiving, from a network device, first configuration information indicating a positioning functionality at least based on capability of the terminal device, the AI/ML model and/or assistance information for the positioning functionality, the assistance information comprising at least the assistance information associated with the monitoring dataset.

In some example embodiments, the method 700 further comprises: receiving, from the network device, second configuration information indicating a monitoring functionality for the AI/ML model.

In some example embodiments, the method 700 further comprises: transmitting, to the network device, a request for a quality indicator of the monitoring dataset; and receiving, from the network device, the SLA indicator and the MIE indicator of the monitoring dataset.

In some example embodiments, the network device comprises a location management function (LMF).

In some example embodiments, determining the monitoring quality criteria comprises: determining a granularity monitoring sensitivity (GMS) level mapped to the SLA indicator based on a mapping between SLA indicators and GMS levels; and determining the monitoring quality criteria for the monitoring dataset based on the determined GMS level and the MIE indicator.

In some example embodiments, the method 700 further comprises: in accordance with a determination that an action is to be applied on the AI/ML model, transmitting the monitoring metric to network device for the network device to determine an action to be applied on the AI/ML model, or transmitting an indication of the action to be applied to the network device.

In some example embodiments, the first apparatus is or is comprised in a terminal device, a radio access network (RAN) device, a core network device, or a LMF.

In some example embodiments, a first apparatus capable of performing any of the method 700 (for example, the terminal device 110, the LMF 130, the network device 120, or any other network entity in FIG. 1) may comprise means for performing the respective operations of the method 700. The means may be implemented in any suitable form. For example, the means may be implemented in a circuitry or software module. The first apparatus may be implemented as or included in any device in FIG. 1.

In some example embodiments, the first apparatus comprises means for obtaining a monitoring metric for an artificial intelligence/machine learning (AI/ML) model that is configured for direct positioning or assisted positioning of a terminal device within a communication network, the monitoring metric being determined based on an error between a positioning inference result of the AI/ML model for a model input and a ground-truth positioning label for the model input within a monitoring dataset; means for determining a monitoring quality criteria for the monitoring dataset based on a spatial label analysis (SLA) indicator and a minimum inference error (MIE) indicator of the monitoring dataset, the SLA indicator indicating a spatial distribution of the monitoring dataset, the MIE indicator indicating an inference error obtained by the AI/ML model using the monitoring dataset in a training phase; and means for, in accordance with a determination that a monitoring quality criteria is dissatisfied by the monitoring metric, determining an action is to be applied on the AI/ML model.

In some example embodiments, the first apparatus further comprises: means for, in accordance with a determination that the monitoring quality criteria is satisfied by the monitoring metric, determining that no action is to be applied on the AI/ML mode.

In some example embodiments, the SLA indicator is determined at least in part based on a similarity between a distribution of ground-truth positioning labels in the monitoring dataset and a reference distribution, and/or wherein the MIE indicator is determined by using at least one subset of the monitoring dataset to monitor the AI/ML model in a monitoring phase.

In some example embodiments, the monitoring dataset is collected during a training phase of the AI/ML model and is used for monitoring of the AI/ML model; and/or wherein the SLA indicator and the MIE indicator of the monitoring dataset are indicated in mapping information between monitoring datasets, SLA indicators, and MIE indicators.

In some example embodiments, the SLA indicator and the MIE indicator are comprised in assistance information associated with the monitoring dataset.

In some example embodiments, the first apparatus comprises a terminal device, and the AI/ML model is deployed at the terminal device, the first apparatus further comprises: means for receiving, from a network device, first configuration information indicating a positioning functionality at least based on capability of the terminal device, the AI/ML model and/or assistance information for the positioning functionality, the assistance information comprising at least the assistance information associated with the monitoring dataset.

In some example embodiments, the first apparatus comprises a terminal device, and the AI/ML model is deployed at a network device, the first apparatus further comprises: means for receiving, from the network device, second configuration information indicating a monitoring functionality for the AI/ML model.

In some example embodiments, the first apparatus further comprises: means for transmitting, to the network device, a request for a quality indicator of the monitoring dataset; and means for receiving, from the network device, the SLA indicator and the MIE indicator of the monitoring dataset.

In some example embodiments, the network device comprises a location management function (LMF).

In some example embodiments, the means for determining the monitoring quality criteria comprises: means for determining a granularity monitoring sensitivity (GMS) level mapped to the SLA indicator based on a mapping between SLA indicators and GMS levels; and means for determining the monitoring quality criteria for the monitoring dataset based on the determined GMS level and the MIE indicator.

In some example embodiments, the first apparatus further comprises: in accordance with a determination that an action is to be applied on the AI/ML model, means for transmitting the monitoring metric to network device for the network device to determine an action to be applied on the AI/ML model, or means for transmitting an indication of the action to be applied to the network device.

In some example embodiments, the first apparatus is or is comprised in a terminal device, a radio access network (RAN) device, a core network device, or a LMF.

In some example embodiments, the first apparatus further comprises means for performing other operations in some example embodiments of the method 700 or the first apparatus. In some example embodiments, the means comprises at least one processor and at least one memory storing instructions that, when executed by the at least one processor, cause the performance of the first apparatus.

FIG. 8 is a simplified block diagram of a device 800 that is suitable for implementing example embodiments of the present disclosure. The device 800 may be provided to implement a communication device, for example, the terminal device 110, the network device 120, or the LMF 130 as shown in FIG. 1. As shown, the device 800 includes one or more processors 810, one or more memories 820 coupled to the processor 810, and one or more communication modules 840 coupled to the processor 810.

The communication module 840 is for bidirectional communications. The communication module 840 has one or more communication interfaces to facilitate communication with one or more other modules or devices. The communication interfaces may represent any interface that is necessary for communication with other network elements. In some example embodiments, the communication module 840 may include at least one antenna.

The processor 810 may be of any type suitable to the local technical network and may include one or more of the following: general purpose computers, special purpose computers, microprocessors, digital signal processors (DSPs) and processors based on multicore processor architecture, as non-limiting examples. The device 800 may have multiple processors, such as an application specific integrated circuit chip that is slaved in time to a clock which synchronizes the main processor.

The memory 820 may include one or more non-volatile memories and one or more volatile memories. Examples of the non-volatile memories include, but are not limited to, a Read Only Memory (ROM) 824, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 822 and other volatile memories that will not last in the power-down duration.

A computer program 830 includes computer executable instructions that are executed by the associated processor 810. The instructions of the program 830 may include instructions for performing operations/acts of some example embodiments of the present disclosure. The program 830 may be stored in the memory, e.g., the ROM 824. The processor 810 may perform any suitable actions and processing by loading the program 830 into the RAM 822.

The example embodiments of the present disclosure may be implemented by means of the program 830 so that the device 800 may perform any process of the disclosure as discussed with reference to FIG. 2 to FIG. 7. The example embodiments of the present disclosure may also be implemented by hardware or by a combination of software and hardware.

In some example embodiments, the program 830 may be tangibly contained in a computer readable medium which may be included in the device 800 (such as in the memory 820) or other storage devices that are accessible by the device 800. The device 800 may load the program 830 from the computer readable medium to the RAM 822 for execution. In some example embodiments, the computer readable medium may include any types of non-transitory storage medium, such as ROM, EPROM, a flash memory, a hard disk, CD, DVD, and the like. The term "non-transitory," as used herein, is a limitation of the medium itself (i.e., tangible, not a signal) as opposed to a limitation on data storage persistency (e.g., RAM vs. ROM).

Generally, various embodiments of the present disclosure may be implemented in hardware or special purpose circuits, software, logic or any combination thereof. Some aspects may be implemented in hardware, and other aspects may be implemented in firmware or software which may be executed by a controller, microprocessor or other computing device. Although various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Some example embodiments of the present disclosure also provide at least one computer program product tangibly stored on a computer readable medium, such as a non-transitory computer readable medium. The computer program product includes computer-executable instructions, such as those included in program modules, being executed in a device on a target physical or virtual processor, to carry out any of the methods as described above. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. The program code may be provided to a processor or controller of a general purpose computer, special purpose computer, or other programmable data processing apparatus, such that the program code, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, although several specific implementation details are contained in the above discussions, these should not be construed as limitations on the scope of the present disclosure, but rather as descriptions of features that may be specific to particular embodiments. Unless explicitly stated, certain features that are described in the context of separate embodiments may also be implemented in combination in a single embodiment. Conversely, unless explicitly stated, various features that are described in the context of a single embodiment may also be implemented in a plurality of embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

**1.** A first apparatus comprising:

means for obtaining (405) a monitoring metric for an artificial intelligence/machine learning, AI/ML, model that is configured for direct positioning or assisted positioning of a terminal device within a communication network, the monitoring metric being determined based on an error between a positioning inference result of the AI/ML model for a model input and a ground-truth positioning label for the model input within a monitoring dataset;

means for determining (410) a monitoring quality criteria for the monitoring dataset based on a spatial label analysis, SLA, indicator and a minimum inference error, MIE, indicator of the monitoring dataset, the SLA indicator indicating a spatial distribution of the monitoring dataset, the MIE indicator indicating an inference error obtained by the AI/ML model using the monitoring dataset in a training phase; and

means for, in accordance with a determination (415) that a monitoring quality criteria is dissatisfied by the monitoring metric, determining (420) an action is to be applied on the AI/ML model.

**2.** The first apparatus of claim 1, further comprising
means for, in accordance with a determination (415) that the monitoring quality criteria is satisfied by the monitoring metric, determining (425) that no action is to be applied on the AI/ML model.

**3.** The first apparatus of claim 1 or 2, wherein the SLA indicator is determined at least in part based on a similarity between a distribution of ground-truth positioning labels in the monitoring dataset and a reference distribution, and/or wherein the MIE indicator is determined by using at least one subset of the monitoring dataset to monitor the AI/ML model in a monitoring phase.

**4.** The first apparatus of any of claims 1 to 3, wherein the monitoring dataset is collected during a training phase of the AI/ML model and is used for monitoring of the AI/ML model; and/or
wherein the SLA indicator and the MIE indicator of the monitoring dataset are indicated in mapping information between monitoring datasets, SLA indicators, and MIE indicators.

**5.** The first apparatus of any of claims 1 to 4, wherein the SLA indicator and the MIE indicator are comprised in assistance information associated with the monitoring dataset.

**6.** The first apparatus of any of claims 1 to 5, wherein the first apparatus comprises the terminal device, and the AI/ML model is deployed at the terminal device, and the first apparatus further comprises:
means for receiving, from a network device, first configuration information indicating a positioning functionality at least based on capability of the terminal device, the AI/ML model and/or assistance information for the positioning functionality, the assistance information comprising at least the assistance information associated with the monitoring dataset.

**7.** The first apparatus of any of claims 1 to 5, wherein the first apparatus comprises the terminal device, and the AI/ML model is deployed at a network device, and the first apparatus further comprises:
means for receiving, from the network device, second configuration information indicating a monitoring functionality for the AI/ML model.

8. The first apparatus of claim 6 or 7, wherein the first apparatus further comprises:

   means for transmitting, to the network device, a request for a quality indicator of the monitoring dataset; and
   means for receiving, from the network device, the SLA indicator and the MIE indicator of the monitoring dataset.

9. The first apparatus of any of claims 6 to 8, wherein the network device comprises a location management function, LMF.

10. The first apparatus of any of claims 1 to 9, wherein the first apparatus further comprises:

    means for determining a granularity monitoring sensitivity, GMS, level mapped to the SLA indicator based on a mapping between SLA indicators and GMS levels; and
    means for determining the monitoring quality criteria for the monitoring dataset based on the determined GMS level and the MIE indicator.

11. The first apparatus of any of claims 1 to 10, wherein the first apparatus further comprises:
    means for, in accordance with a determination that an action is to be applied on the AI/ML model,

    transmitting the monitoring metric to a network device for the network device to determine an action to be applied on the AI/ML model, or
    transmitting an indication of the action to be applied to the network device.

12. The first apparatus of any of claims 1 to 5, wherein the first apparatus is or is comprised in the terminal device, a radio access network device, a core network device, or an LMF.

13. A method comprising:

    obtaining (405), by a first apparatus, a monitoring metric for an artificial intelligence/machine learning, AI/ML, model that is configured for direct positioning or assisted positioning of a terminal device within a communication network, the monitoring metric being determined based on an error between a positioning inference result of the AI/ML model for a model input and a ground-truth positioning label for the model input within a monitoring dataset; determining (410) a monitoring quality criteria for the monitoring dataset based on a spatial label analysis, SLA, indicator and a minimum inference error, MIE, indicator of the monitoring dataset, the SLA indicator indicating a spatial distribution of the monitoring dataset, the MIE indicator indicating an inference error obtained by the AI/ML model using the monitoring dataset in a training phase; and
    in accordance with a determination (415) that a monitoring quality criteria is dissatisfied by the monitoring metric, determining (420) an action is to be applied on the AI/ML model.

14. The method of claim 13, further comprising
    in accordance with a determination (415) that the monitoring quality criteria is satisfied by the monitoring metric, determining (425) that no action is to be applied on the AI/ML model.

15. A computer readable medium comprising instructions stored thereon, which when executed by at least one processor, cause a first apparatus at least to perform the method of claim 13 or 14.

FIG. 1

**FIG. 2**

**FIG. 3A**

**FIG. 3B**

**FIG. 3C**

400 ⟍

START

405 —〔 OBTAIN A MONITORING METRIC

410 —〔 DETERMINE A MONITORING QUALITY CRITERIA FOR THE MONITORING DATASET

415 —〔 A MONITORING QUALITY CRITERIA IS DISSATISFIED BY THE MONITORING METRIC?

NO

YES

420 —〔 DETERMINE THAT AN ACTION IS TO BE APPLIED ON THE AI/ML MODEL

425 —〔 DETERMINE THAT NO ACTION IS TO BE APPLIED ON THE AI/ML MODEL

END

**FIG. 4**

500

110 —
TERMINAL
DEVICE

130 —
LMF

**REPORTING CONDITIONS**
(INCLUDING A CONDITION THAT SUPPORTS PERFORMANCE
MONITORING BASED ON GROUND TRUTH)

505 → 510

FUNCTIONALITY A, INCLUDING DATASET ASSISTANCE
INFORMATION FOR THE SPECIFIC SITE/SCENARIO/ZONE

520 ← 515

SELECT THE BEST MODEL BASED ON ANY VALID
CRITERIA 525

**PERFORMANCE MONITORING METHOD**
AS PART OF THE SCOPE OF FUNCTIONALITY A

535 ← 530

REQUEST FOR SLA AND MIE OF THE SPECIFIC DATASET

540 → 545

SLA AND MIE OF THE SPECIFIC DATASET

555 ← 550

CALCULATE AN MM 560

DETERMINE A GMS BASED ON THE SLA
565

IF LMF-SIDE MONITORING

DETERMINE IF MM > GMS x MIE 570

MM

575 → 580

MAKE A MONITORING DECISION 585

IF TERMINAL DEVICE-SIDE
MONITORING

DETERMINE IF MM > GMS x MIE 590

MONITORING DECISION

595 → 598

**FIG. 5**

22

600

| TERMINAL DEVICE | 110 | | 130 | LMF |

**REPORTING CONDITIONS**
(INCLUDING A CONDITION THAT SUPPORTS MONITORING BASED ON GROUND TRUTH)
605 → 610

FUNCTIONALITY B FOR MONITORING
620 ← 615

**PERFORMANCE MONITORING METHOD**
AS PART OF THE SCOPE OF FUNCTIONALITY B
630 ← 625

REQUEST FOR SLA AND MIE OF THE SPECIFIC DATASET USED OF MODEL TRAINING
635 → 640

SLA AND MIE OF THE SPECIFIC DATASET
650 ← 645

CALCULATE AN MM 655

DETERMINE A GMS BASED ON THE SLA 660

**IF LMF-SIDE MONITORING**

DETERMINE IF MM > GMS x MIE 665

REPORT MM
670 → 675

MAKE A MONITORING DECISION 680

**IF TERMINAL DEVICE-SIDE MONITORING**

DETERMINE IF MM > GMS x MIE 685

REPORT MONITORING DECISION
690 → 698

**FIG. 6**

700

710
OBTAIN A MONITORING METRIC FOR AN ARTIFICIAL INTELLIGENCE/MACHINE LEARNING (AI/ML) MODEL THAT IS CONFIGURED FOR DIRECT POSITIONING OR ASSISTED POSITIONING OF A TERMINAL DEVICE WITHIN A COMMUNICATION NETWORK, THE MONITORING METRIC BEING DETERMINED BASED ON AN ERROR BETWEEN A POSITIONING INFERENCE RESULT OF THE AI/ML MODEL FOR A MODEL INPUT AND A GROUND-TRUTH POSITIONING LABEL FOR THE MODEL INPUT WITHIN A MONITORING DATASET

720
DETERMINE A MONITORING QUALITY CRITERIA FOR THE MONITORING DATASET BASED ON A SPATIAL LABEL ANALYSIS (SLA) INDICATOR AND A MINIMUM INFERENCE ERROR (MIE) INDICATOR OF THE MONITORING DATASET, THE SLA INDICATOR INDICATING A SPATIAL DISTRIBUTION OF THE MONITORING DATASET, THE MIE INDICATOR INDICATING AN INFERENCE ERROR OBTAINED BY THE AI/ML MODEL USING THE MONITORING DATASET IN A TRAINING PHASE

730
IN ACCORDANCE WITH A DETERMINATION THAT A MONITORING QUALITY CRITERIA IS DISSATISFIED BY THE MONITORING METRIC, DETERMINE AN ACTION IS TO BE APPLIED ON THE AI/ML MODEL

**FIG. 7**

800

840 COMMMUNICATION MODULE

810 PROCESSOR

820 MEMORY
822 RAM
824 ROM
830

**FIG. 8**

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KEETH JAYASINGHE ET AL: "Other aspects on ML for positioning accuracy enhancement", 3GPP DRAFT; R1-2307243; TYPE DISCUSSION; FS_NR_AIML_AIR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Toulouse, FR; 20230821 - 20230825 11 August 2023 (2023-08-11), XP052436473, Retrieved from the Internet: URL:https://www.3gpp.org/ftp/TSG_RAN/WG1_RL1/TSGR1_114/Docs/R1-2307243.zip R1-2307243_Other Aspects on ML for Positioning.docx [retrieved on 2023-08-11] | 1-9, 11-15 | INV. G01S5/02 H04W24/08 H04W64/00 |
| A | * figure 10 * *pages 1-2, section 2 * * page 20, section 4.2.1 * * page 21, table * * pages 23-26, section 5 up to section 5.2.3 * | 10 | |

----- 

-/--

**TECHNICAL FIELDS SEARCHED (IPC)**

G01S
H04W

The present search report has been drawn up for all claims

| Place of search | Date of completion of the search | Examiner |
|---|---|---|
| Munich | 13 May 2025 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................................
& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

**Application Number**

EP 24 21 5640

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JIWON KANG ET AL: "Evaluation on AI/ML for positioning accuracy enhancement", 3GPP DRAFT; R1-2303080; TYPE DISCUSSION; FS_NR_AIML_AIR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Online; 20230417 - 20230426 7 April 2023 (2023-04-07), XP052293648, Retrieved from the Internet: URL:https://www.3gpp.org/ftp/TSG_RAN/WG1_R L1/TSGR1_112b-e/Docs/R1-2303080.zip R1-2303080 AI_eval_pos_final.docx [retrieved on 2023-04-07] * page 2, section 2.1, first paragraph * ----- | 1-15 | |
| A | Alawieh Mohammad ET AL: "5G Positioning Advancements with AI/ML", , 10 November 2023 (2023-11-10), pages 1-11, XP093223285, Retrieved from the Internet: URL:https://arxiv.org/pdf/2401.02427 * the whole document * ----- | 1-15 | **TECHNICAL FIELDS SEARCHED (IPC)** |

The present search report has been drawn up for all claims

| Place of search | Date of completion of the search | Examiner |
|---|---|---|
| Munich | 13 May 2025 | Hekmat, Taymoor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FI 20245161